# EUROPÄISCHE PATENTSCHRIFT

(11) **EP 0 738 643 B1**
(45) Veröffentlichungstag und Bekanntmachung des Hinweises auf die Patenterteilung: **22.12.1999**
(21) Anmeldenummer: 96101308.3
(22) Anmeldetag: 31.01.1996
(51) Int. Cl.: B61H 5/00

(54) **Bremszangeneinheit für Scheibenbremsen von Fahrzeugen, insbesondere Schienenfahrzeugen**
Brake tong unit for vehicle disc brakes,particularly for railway vehicles
Unité de pince de frein pour freins à disque pour véhicule, notamment pour véhicules ferroviaires

(30) Priorität: 19.04.1995 DE 19514463
(43) Veröffentlichungstag der Anmeldung: 23.10.1996
(73) Patentinhaber: KNORR-BREMSE Systeme für Schienenfahrzeuge GmbH, 80809 München (DE)
(72) Erfinder: Elstorpff, Marc-Gregory, Dr., D-80637 München (DE); Staltmeier, Josef, D-80807 München (DE); Fuderer, Erich, D-82110 Germering (DE); Sponfeldner, Oskar, D-84453 Mühldorf a. Inn (DE)

(56) Entgegenhaltungen:
- EP-B- 0 146 750
- DE-A- 3 032 992
- US-A- 1 941 122
- US-A- 3 288 253

## Beschreibung

Die Erfindung bezieht sich auf eine Bremszangeneinheit für Scheibenbremsen von Fahrzeugen, insbesondere Schienenfahrzeugen, mit zwei im wesentlichen annähernd parallel in einer Zangenebene nebeneinander verlaufenden Zangenhebeln, an deren eine Enden zum Zuspannen der Scheibenbremse an eine Bremsscheibe anpreßbare Bremsbacken angelenkt sind und die an ihren anderen Enden und in ihren mittleren Bereichen miteinander bzw. mit einem Gehäuse schwenkbar gekoppelt sind, wobei zumindest eine der Koppelstellen als Exzentergetriebe mit einer von einem Bremskrafterzeuger der Betriebsbremse in Zuspannrichtung drehbaren Welle und die anderen Koppelstellen als Drehlager ausgebildet sind.

Aus der DE 30 32 992 A1 ist eine Industriescheibenbremse zum Stillsetzen intermittierend wirkender Arbeitsmaschinen bekannt, bestehend aus einer Bremsscheibe, an die mit Bremsbelägen versehene radial angeordnete Zangen anlegbar sind, wobei zum Aufbringen der Bremskraft die Zangenschenkel mittels Federwirkung um fest am Rahmen der Bremse angeordnete Schwenkbolzen schwenkbar und mit ihren Bremsbelägen an die Bremsscheibe anlegbar sind und zum Lösen der Bremse Einrichtungen zum Schwenken der Zangenschenkel entgegen der Federwirkung vorgesehen sind, wobei die Einrichtung zum Lösen der Bremse aus einem Drehfeldmagneten mit Untersetzungsgetriebe besteht, dessen Drehmoment in eine der Federkraft entgegengerichtete Kraft umsetzbar ist. Diese für feststehende Industriemaschinen vorgesehene Scheibenbremse weist keine bei Fahrzeugen erforderliche Feststellbremse auf.

Eine diesen Merkmalen entsprechende Bremszangeneinheit ist in der nicht vorveröffentlichten DE-Patentanmeldung P 44 31 353.5 beschrieben und dargestellt. Hierbei ist ein Exzentergetriebe vorgesehen, das einem Zangenhebel zugeordnet ist. Das gegenüberliegende Drehlager des anderen Zangenhebels ist am Gehäuse, die beiden restlichen Drehlager sind an den Enden einer Nachstellvorrichtung gehaltert. Bei einem bevorzugten Ausführungsbeispiel greifen das Exzentergetriebe und das Gehäuse-Drehlager in den mittleren Bereich der Zangenhebel an. Die Welle ist am Gehäuse gelagert, sie weist einen etwa in der Zangenebene in Richtung zum anderen Zangenhebel sich erstreckenden Kurbelarm auf, an dessen Ende die etwa parallel zu und zwischen den Zangenhebeln verlaufende Kolbenstange eines bremsscheibenabgewandt angeordneten, den Bremskrafterzeuger darstellenden Bremszylinders angelenkt ist. Weiterhin kann die Welle an ihren Enden exzentrische, zu ihr achsparallele Zapfen aufweisen, an welchen je eine Wange eines der doppelwangig ausgebildeten Zangenhebel gelagert ist.

Die Bremszangeneinheit, auf welche sich die Erfindung bezieht, kann, muß aber nicht, eines oder mehrere dieser Ausbildungsmerkmale ebenfalls aufweisen.

Es ist oftmals erforderlich, für das Zuspannen einer Bremszangeneinheit zusätzlich zur Betriebsbremse eine Feststellbremse vorzusehen, deren Zuspannkraft von einem Federspeicherbremszylinder erzeugt oder durch einen beispielsweise von einer manuell betätigbaren Handbremseinrichtung, wie einem Handbremsrad, bewegbaren Seilzug zugeführt wird. Es ist allgemein bekannt, derartige Federspeicherbremszylinder auf die Betriebsbremszylinder aufzusatteln, doch ergeben sich hierbei große, unhandliche Kombizylinder-Konstruktionen.

Bei einer Bremzangeneinheit nach der erwähnten DE-Patentanmeldung P 44 31 353.5 könnte es naheliegen, bei Bedarf einer Feststellbremse eine derartige Kombizylinder-Konstruktion zu verwenden oder, bei Seilzugbetätigung, die Kolbenstange wie bekannt vom Seilzug verschieblich auszubilden. Beiden Ausführungen haftet der Mangel an, daß über die Koppelung der Kolbenstange mit dem Exzentergetriebe und durch dieses selbst sowohl der Betriebsbremse als auch der Feststellbremse eine bestimmte Kraftübersetzung für die Zuspannkraft der Scheibenbremse vorgegeben ist; die Feststellbremse benötigt jedoch oftmals eine andere Kraftübersetzung als die Betriebsbremse. Außerdem erfordert die Kombizylinder-Konstruktion einen Bauraum, der bei einer Bremszangeneinheit der beschriebenen, bevorzugten Ausführungsart selbst als auch bei deren Montage an einem Fahrzeug oftmals nicht vorhanden ist.

Für Klotzbremseinheiten ist es aus der EP-B-0146750 bekannt, einen Übersetzungshebel vorzusehen, der in seinem mittleren Bereich an einem Gehäuse, und hierzu um eine kurze Hebellänge versetzt, an einer zum Bremsklotz führenden Druckstange angelenkt ist. An einem Ende des Übersetzungshebels greift über eine Anschlagvorrichtung die Kolbenstange eines Betriebsbremszylinders an, das andere Ende ist zu einer Keilfläche eines Keilgetriebes ausgebildet, auf welcher die von einem Federspeicherbremszylinder einer Feststellbremse bewegliche Rolle abrollbar ist. Die Betriebsbremse und die Feststellbremse können somit unterschiedliche, jeweils für sie optimale Kraftübersetzungen erhalten. Der Bremszylinder und der Federspeicherbremszylinder sind mit zueinander rechtwinklig verlaufenden Achsrichtungen nahe des unteren bzw. oberen Endes des vertikalen Übersetzungshebels angeordnet, was für Klotzbremseinheiten günstig, für Bremszangeneinheiten jedoch unbrauchbar ist.

Es ist Aufgabe der Erfindung, eine Bremszangeneinheit, welche zumindest die eingangs angegebenen Merkmale aufweist, in einfacher und bauraumgünstiger Weise mit einer Feststellbremse auszustatten, welche eine Kraftübersetzung aufweist, die unabhängig von derjenigen der Betriebsbremse ist und optimal allein entsprechend dem Bedarf der Feststellbremse festlegbar ist.

Diese Aufgabe wird für eine Bremszangeneinheit der vorstehend genannten Art nach der Erfindung gelöst durch einen mit der Welle gekoppelten, von einer Feststellbremse in Zuspannvorrichtung betätigbaren Drehantrieb. Durch den bauraumgünstig unterbringbaren Drehantrieb erhält die Feststellbremse eine nur ihr eigene Kraftübersetzung.

Für eine derartige Bremszangeneinheit zeigen die Unteransprüche nach der weiteren Erfindung zweckmäßige Merkmale zur vorteilhaften, weiteren Ausbildung auf.

In der Zeichnung sind bevorzugte Ausführungsbeispiele für nach der Erfindung ausgebildete Bremszangeneinheiten dargestellt, und zwar zeigt
- Fig.1: eine Aufsicht auf eine Bremzangeneinheit mit aufgeschnittenem Gehäuse und Bremszylinder,
- Fig.2: eine zum Teil aufgeschnittene Seitenansicht der Bremszangeneinheit in etwas kleinerem Maßstab,
- Fig.3: einen die Welle zeigenden Querschnitt durch die Bremszangeneinheit,
- Fig.4: eine Einzelheit in einem Horizontalteilquerschnitt,
- Fig.5: eine der Fig.2 entsprechende Seitenansicht eines zweiten Ausführungsbeispieles,
- Fig.6: einen im wesentlichen der Fig.3 entsprechenden Querschnitt durch das zweite Ausführungsbeispiel,
- Fig.7: eine Einzelheit des zweiten Ausführungsbeispiels,
- Fig.8 und 9: die Einzelheit entsprechend Fig.7 in unterschiedlichen Funktionsstellungen,
- Fig.10: eine den Fig. 7 bis 9 entsprechende Einzelheit in Verbidung mit einem Federspeicherbremszylinder in vergrößertem Maßstab und
- Fig.11 und 12: eine weitere Einzelheit des zweiten Ausführungsbeispiels in horizontalen Schnitten.

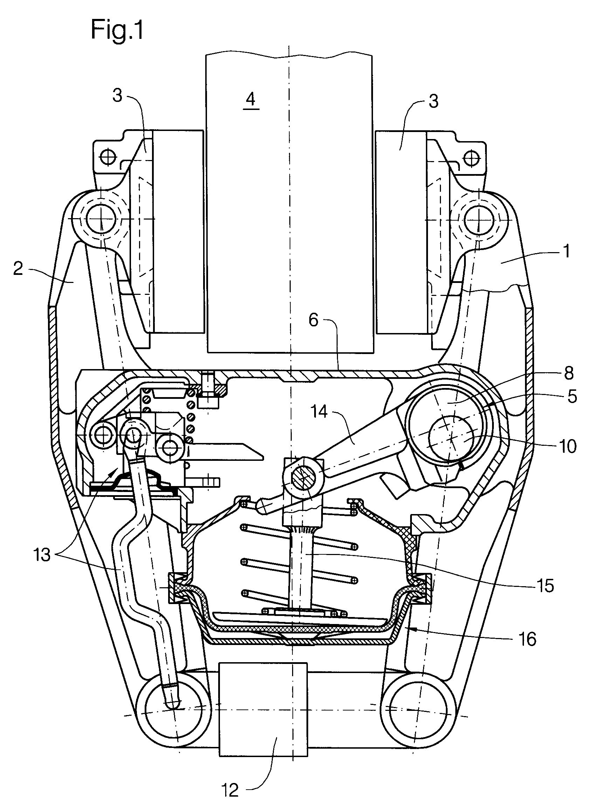

In den Fig.1 bis 11 sind gleiche oder einander entsprechende Teile mit gleichen Bezugszeichen versehen.

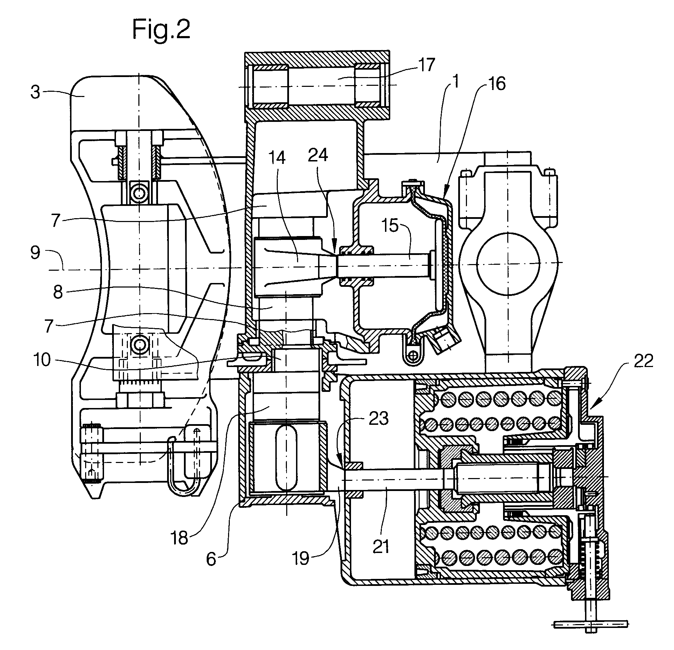

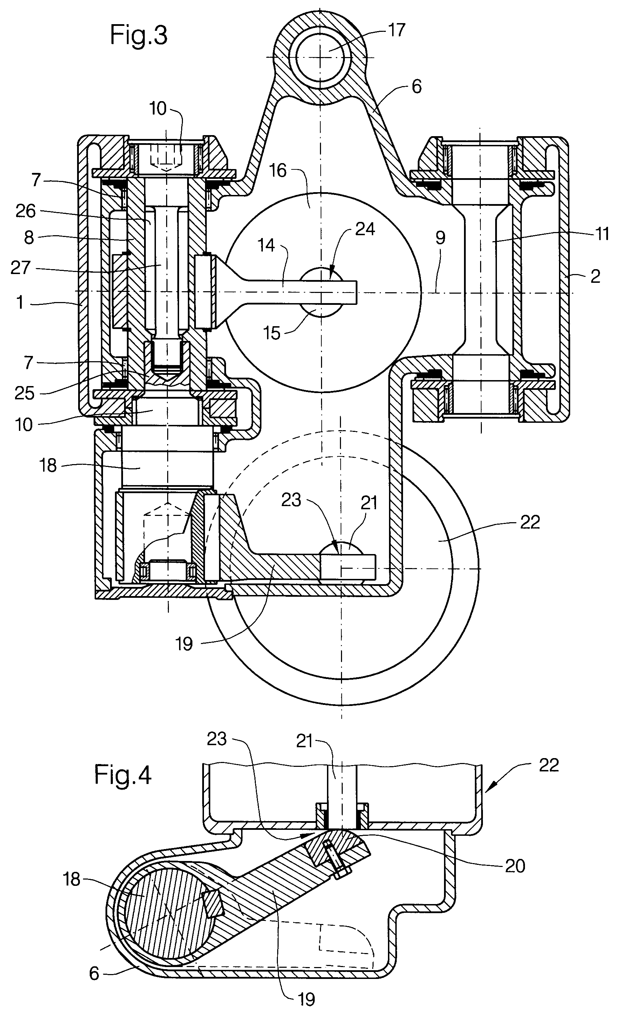

Die einen etwa in einer Zangenebene verlaufenden Schnitt durch eine Bremzangeneinheit darstellende Fig.1 zeigt zwei nebeneinander angeordnete Zangenhebel 1 und 2, deren jeder doppelwangig ausgebildet ist. Die einen Enden der Zangenhabel 1 und 2 sind an Bremsbacken 3 angelenkt, zwischen welche eine abzubremsende Bremsscheibe 4 eingreift; die Bremsscheibe 4 kann eine Wellen- oder eine Radbremsscheibe sein. Im mittleren Bereich ist der Zangenhebel 1 mittels eines Exzentergetriebes 5 an ein Gehäuse 6 und der Zangenhebel 2 unmittelbar, in aus Fig. 3 dargestellter Weise vermittels eines Bolzens 11, an das Gehäuse 6 drehbar angekoppelt. Das Exzentergetriebe 5 weist eine auch aus Fig. 2 und insbesondere Fig.3 ersichtliche, am Gehäuse 6 in Lagerstellen 7 drehbar gelagerte Welle 8 auf, welche rechtwinklig zur in Fig. 2 strichpunktiert dargestellten Zangenebene 9 verläuft. Im äußeren Anschluß an die Lagerstellen 7 weist die Welle 8 exzentrische, in Entfernungsrichtung von der Bremsscheibe 4 radial versetzte Zapfen 10 auf, an deren jedem eine Wange des Zangenhebels 1 drehbar gelagert ist. Die zweiten Enden der beiden Zangenhebel 1 und 2 sind gemäß Fig.1 an den Enden einer Nachstellvorrichtung 12 angelenkt, welche über ein hier nicht weiter interessierendes Gestänge 13 oder in anderer Art zum Konstanthalten des Lösespiels der Bremsbacken 3 zur Bremsscheibe 4 betätigbar ist. Von der Welle 8 kragt etwa in Richtung zum gegenüberliegenden Zangenhebel 2 ein Kurbelarm 14 aus, dessen Ende an der Kolbenstange 15 eines Bremszylinders 16 der Betriebsbremse angelenkt ist. Der am Gehäuse 6 gehalterte Bremszylinder 16 befindet sich zwischen den beiden Zangenhebeln 1 und 2 auf der bremsscheibenabgewandten Seite des Kurbelarms 14. Mittels eines Lagerauges 17 ist das Gehäuse 6 an einem nicht dargestellten Fahrzeug- oder Drehgestellrahmen anlenkbar; selbstverständlich kann für das Gehäuse 6 auch eine andere Halterung vorgesehen sein.

Beim Druckmittelbeaufschlagen des Bremszylinders 16 wird über den Kurbelarm 14 die Welle 8 derart gedreht, daß sich die Zapfen 10 dem gegenüberliegenden Zangenhebel 2 annähern, die Bremszangeneinheit wird hierbei unter Anpressen der Bremsbacken 3 an die Bremsscheibe 4 zugespannt.

Insoweit entspricht die Bremszangeneinheit in Aufbau und Funktion derjenigen nach der erwähnten DE-Patentanmeldung P 44 31 353.5. Selbstverständlich sind auch Abweichungen des Aufbaues möglich, beispielsweise kann die Nachstellvorrichtung an den mittleren und können das Gehäuse 6 bzw. das Exzentergetriebe 5 an den endseitigen Ankoppelstellen der Zangenhebel 1 und 2 angelenkt sein, wobei die Funktionsrichtung des Exzentergetriebes umzukehren ist.

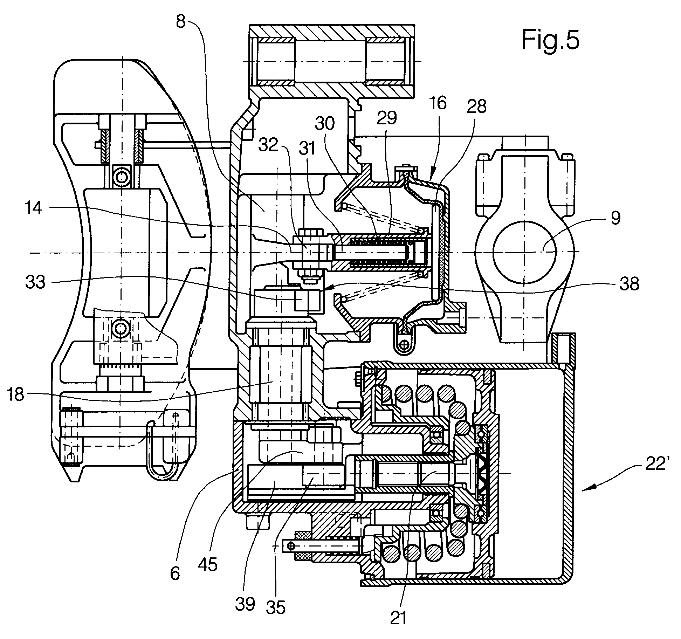

Aus den Fig. 2 und 3 ist ersichtlich, daß die Welle 8 einseitig, vertikal unten, über den dortigen Zapfen 10 hinaus durch eine mit ihr verbundene, gegebenenfalls einstückige Zusatzwelle 18 verlängert ist. Von der Zusatzwelle 18 kragt zu ihr relativ unverdrehbar ein Drehhebel 19 aus, der sich etwa parallel zum Kurbelarm 14 erstreckt. Am freien Ende des Drehhebels 19 ist, wie Fig.4 zeigt, ein gerundetes Gleitstück 20 gehaltert, an welchem (siehe auch Fig.2 und 3) das Ende einer Kolbenstange 21 eines einer Feststellbremse zugehörenden Federspeicherbremszylinders 22 unter Bilden einer aushebbaren Anschlagvorrichtung 23 anliegt. Die Kolbenstange 21 verläuft in großem, angenähert rechtem Winkel zum Drehhebel 19.

Der Federspeicherbremszylinder 22 ist am Gehäuse 6 mit Abstand unterhalb der Zangenebene 9 mit zum Bremszylinder 16 etwa parallel verlaufender Achsrichtung gehaltert, der Federspeicherbremszylinder 22 befindet sich nach dem Ausführungsbeispiel einbauraumsparend geringfügig seitlich versetzt unterhalb des Bremszylinders 16. Der Aufbau und die Funktionsweise des Federspeicherbremszylinders 22 entsprechen der EP-B-0001805 und bedürfen daher hier keiner weiteren Erläuterung; wesentlich ist lediglich, daß bei Druckabbau seiner Beaufschlagung, z.B. bei Druckmittelausfall, bei diesem "drückend" ausgebildeten Federspeicherbremszylinder 22 seine Kolbenstange 21 ausfährt und hierbei durch ihre Anlage am Drehhebel 21, also vermittels der Anschlagvorrichtung 23, diesen mitsamt der Zusatzwelle 18 und der Welle 8 in Betätigungsrichtung des Exzentergetriebes 5 zum Zuspannen der Bremszangeneinheit dreht.

Bei diesem Zuspannen der Bremszangeneinheit nimmt der Kurbelarm 14 bei der in Fig.1 gezeigten Bolzenanlenkung die Kolbenstange 15 und den Kolben des Bremszylinders 16 mit, wodurch unnötig die Zuspannkraft gemindert und Verschleiß verursacht werden können. Zur Abhilfe ist es möglich, anstelle der in Fig.1 gezeigten Bolzenanlenkung eine der Anschlagvorrichtung 23 gemäß Fig.2 und 3 ausgebildete Anschlagvorrichtung 24 zwischen der Kolbenstange 15 und dem Kurbelarm 14 vorzusehen: Beim vorstehend beschriebenen Zuspannvorgang hebt sich diese Anschlagvorrichtung aus, d.h. der Kurbelarm 14 entfernt sich von der Stirnfläche der Kolbenstange 15, und die Kolbenstange 15 sowie der Kolben des Bremszylinders 16 verbleiben in Ruhe, wodurch hier keine Kraft vergeudet werden und kein Verschleiß auftreten kann. Entsprechend wirkt die Anschlagvorrichtung 23 beim Betätigen der Betriebsbremse: Wird die Welle 8 vemittels des Bremszylinders 16 zum Zuspannen der Bremszangeneinheit gedreht, so hebt sich die Anschlagvorrichtung 23 aus und der Federspeicherbremszylinder 22 kann den Zuspannvorgang nicht behindern.

Anstelle der Anschlagvorrichtung 23 und/oder 24 kann auch die Kolbenstange des jeweiligen Zylinders teleskopartig ausziehbar ausgebildet sein, wie es Fig.5 und 11 sowie 12 zum Bremszylinder 16 zeigen: Der Kolben 28 des Bremszylinders 16 trägt ein Kolbenstangenrohr 29, in welches ein von einer Feder 30 in Einzugsrichtung bis zur Anlage an einem Endanschlag vorgespannter Stößel 31 ausziehbar eingreift, das freie Ende des Stößels 31 ist am Kurbelarm 14 mittels eines Bolzendrehlagers 32 angelenkt.

Die Anschlagvorrichtung 23, der Drehhebel 19 und die Zusatzwelle 18 bilden zusammen einen von der Feststellbremse, dem Federspeicherbremszylinder 22, in Zuspannrichtung der Bremszangeneinheit betätigbaren Drehantrieb für die Welle 8. Anstelle des Federspeicherbremszylinders 22 kann auch eine andersartige Feststellbremse, beispielsweise ein Seil- oder Gestängezug einer manuell betätigbaren Handbremse mit dem Drehhebel 19 gekoppelt sein. In weiteren Abänderungen des Ausführungsbeispiels kann es zweckmäßig sein, die Zusatzwelle 18 nicht fliegend auszubilden, sonderen wie die Welle 8 am Gehäuse 6 drehzulagern. Hierbei kann es zur Montageerleichterung vorteilhaft sein, wenn die Zusatzwelle 18 einen etwas größeren Durchmesser als die Welle 8 aufweist, so daß beide Wellen von unten her in das Gehäuse 6 einführbar sind; die untere Wange des Zangenhebels 1 ist hierbei mittels eines geteilten Lagers an ihrem Zapfen 10 lagerbar. Es ist jedoch auch möglich, die Welle 8 und Zusatzwelle 18 getrennt auszubilden und vermittels einer aus Sicherheitsgründen möglichst formschlüsseg auszubildenden Drehkupplung miteinander zu verbinden, wobei zusätzlich zum Ersatz der Anschlagvorrichtung 23 eine in Zuspanndrehrichtung der Welle 8 lösende Einwegdrehkupplung vorgesehen werden kann, der Drehhebel 19 kann dann vermittels eines üblichen Bolzengelenkes an der Kolbenstange 21 angelenkt werden.

Aus Fig.3 ist eine besonders vorteilhafte Wellenausbildung ersichtlich: Der untere Zapfen 10 gehört hierbei fest, insbesondere einstückig der Zusatzwelle 18 zu und weist eine Verlängerung 25 auf, die Welle 6 ist mit einer exzentrischen Längsbohrung 26 versehen und der obere Zapfen 10 ist vom gegebenenfalls ein Wälzlager tragenden Kopf eines Schraubbolzens 27 gebildet. Der Schraubbolzen 27 durchragt die Längsbohrung 26 und ist mit einem Sacklochgewinde in der Verlängerung 25 verschraubt, die Verlängerung 25 greift in eine Erweiterung der Längsbohrung 26 ein, mit deren Wandung sie durch nicht dargestellte Schlüsselflächen formschlüssig drehgekoppelt sein kann.

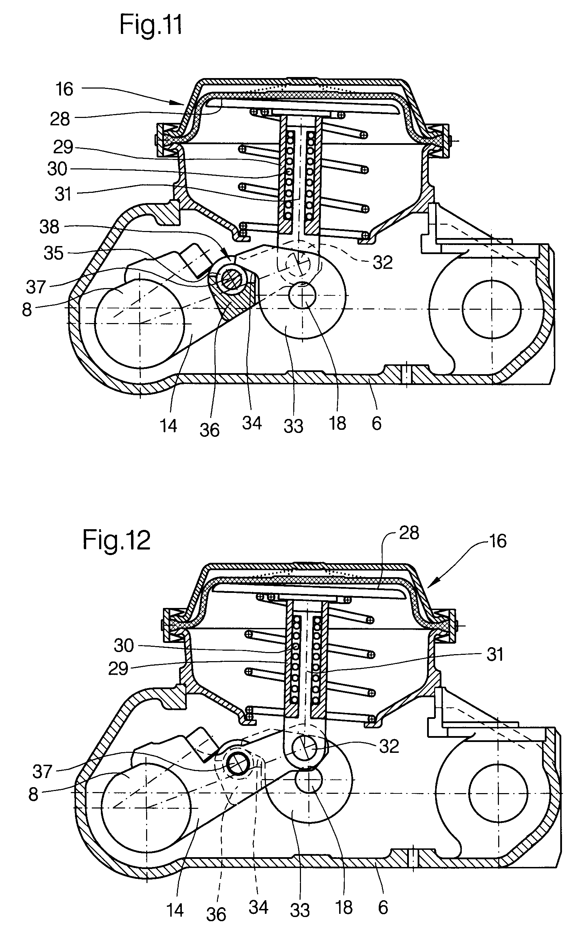

Beim Ausführungsbeispiel nach den Fig.5 bis 12 ist die Welle 8 wie zur DE-Patentanmeldung P 44 31 353.5 vorstehend beschrieben ausgebildet, die Zusatzwelle 18 ist seitlich bis etwa mittig zwischen die beiden Zangenhebeln 1 und 2 versetzt angeordnet und erstreckt sich nach oben bis dicht unterhalb des etwa in der Zangenebene 9 befindlichen Kurbelarmes 14. Wie besonders deutlich aus den annähernd in der Zangenebene 9 verlaufende Teilschnitte zeigenden Fig.11 und 12 ersichtlich trägt die Zusatzwelle 18 an ihrem oberen, kurbelarmseitigen Ende drehfest einen Drehnocken 33 mit einer etwa radial und seitlich in Richtung zur Welle 8 hin verlaufenden Fläche 34. Auf der Fläche 34 ist eine Rolle 35 mit zur Welle 8 parallel verlaufender Achsrichtung an einem vom Kurbelarm 14 nach unten auskragenden Rollenhalter 36 drehbar gelagert, die Rolle 35 kann der Außenring eines Wälzlagers sein. Der Rollenhalter 36 umfaßt halbkreisförmig auf der der Fläche 34 abgewandten Seite die Rolle 35 und haltert zu beiden Stirnseiten der Rolle 35 eine diese durchsetzende Achse 37.

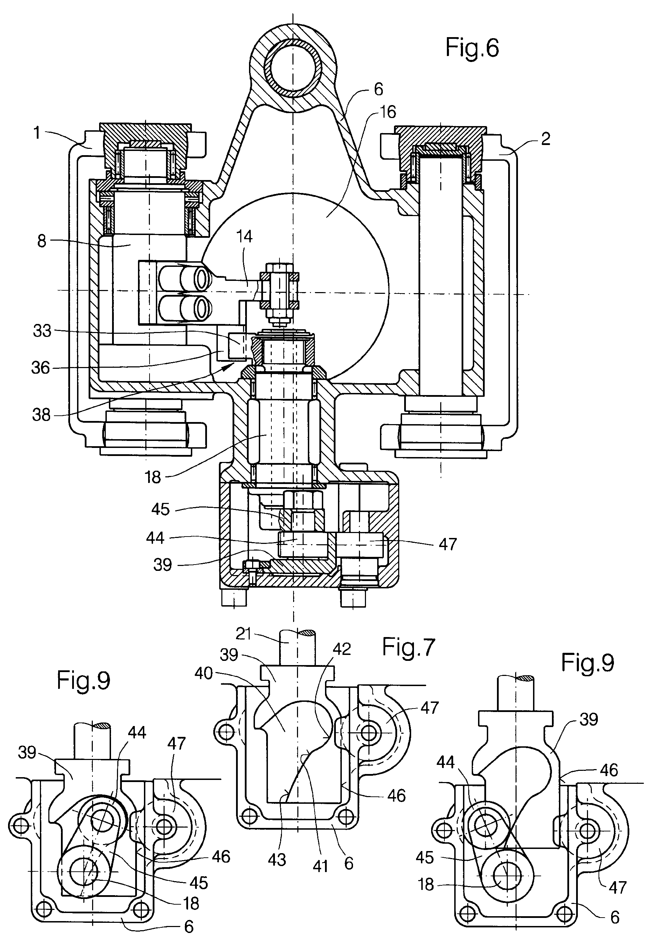

Beim Drehen der Zusatzwelle 18 vermittels eines von der Feststellbremse betätigbaren Drehantriebs, der beispielsweise - abweichend zu den Darstellungen der Fig.5 und 6 - entsprechend den Fig.2 bis 4 ausgebildet sein kann, in Zuspannrichtung der Bremszangeneinheit, nach Fig.11 und 12 entgegen dem Uhrzeigersinn, wird von der Fläche 34 die Rolle 35 unter Abrollen mitgenommen und der Kurbelarm 14 hierdurch mitsamt der Welle 8 gedreht, die Bremszangeneinheit wird hierbei wie vorstehend bereits beschrieben zugespannt. Die Fläche 34 bildet mit der Rolle 35 eine aushebbare Anschlagvorrichtung 38, im Drehantrieb der Zusatzwelle 18 kann daher eine aushebbare Anschlagvorrichtung 23 entfallen.

Beim Ausführungsbeispiel nach Fig.2 bis 4 können anstelle der dort gezeigten Anschlagvorrichtungen 23 und/oder 24 Anschlagvorrichtungen in Bauart entsprechend der Anschlagvorrichtung 38 mit Rolle und demgemäß nur geringer Rollreibung verwendet werden, hierdurch ergibt sich ein hoher Wirkungsgrad der Kraftübertragung.

Beim Ausführungsbeispiel nach den Fig.5 und 6 ist ein "ziehender" Federspeicherbremszylinder 22' (in Fig.6 weggelassen) vorgesehen, die Kolbenstange 21 fährt somit beim Abbau seiner Druckmittelbeaufschlagung ein. Im weiteren ist bei diesem Ausführungsbeispiel für den Drehantrieb ein Keilgetriebe vorgesehen, wie nachstehend beschrieben:

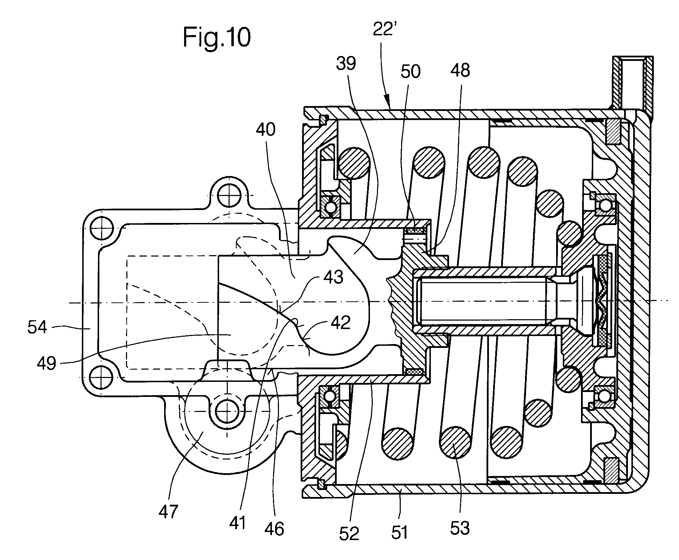

Am Ende der Kolbenstange 21 ist ein in den Fig.7 bis 9 dargestellter Keilkörper 39 befestigt, der in Achsrichtung der Kolbenstange 21 linearverschieblich ist. Der Keilkörper 39 weist als Seitenfäche einer zumindest einseitig offenen Nut 40 eine Keilfläche 41 auf, wie besonders deutlich aus Fig.7 und 10 ersichtlich ist. Die Keilfläche 41 weist, wie von Keilbremszuspannvorrichtungen allgemein bekannt, einen zu Bremsbeginn für das Bremsenanlegen wirksamen, steilen Abschnitt 42 und einen anschließenden, während Festbremsvorgängen wirksamen, flachen Abschnitt 43 auf. An der Keilfläche 41 liegt eine Rolle 44 - diese ist in Fig.7 und 10 nicht dargestellt - abrollbar an, die am Ende eines Drehhebels 45 drehbar gelagert ist (Fig.8 und 9). Der Drehhebel 45 ist am unteren Ende der Zusatzwelle 18 drehfest gehaltert. Seitens der Keilfläche 41 weist der Keilkörper 39 außenseitig eine parallel zur Achsrichtung der Kolbenstange 21 verlaufende, ebene Führungsfläche 46 auf, an welcher gegenüberliegend zur Aufstandsstelle der Rolle 44 auf der Keilfläche 41 eine am Gehäuse 6 drehbar gelagerte Rolle 47 abrollbar anliegt. Die Rolle 47 stützt den Keilkörper 39 entgegen der auf ihn einwirkenden Anlagekraft der Rolle 44 ab.

Bei druckmittelbeaufschlagtem Federspeicherbremszylinder 22' und ausgefahrener Kolbenstange 21, also gelöster Feststellbremse, liegt die Rolle 6, wie in Fig.8 gezeigt, am Abschnitt 42 der Keilfläche 41 an. Beim Druckmittelentlasten des Federspeicherbremszylinders 22', also einem Betätigen der Feststellbremse, nimmt die einfahrende Kolbenstange 21 den Keilkörper 39 mit, wobei die Rolle 44 auf der Keilfläche 41 abrollt. Dabei wird anfänglich, während des Abrollens auf dem steilen Abschnitt 42, der Drehhebel 45 relativ schnell gedreht, wodurch das Lösespiel zwischen den Bremsbacken 3 und der Bremsscheibe 4 bis zum Bremsenanlegen rasch durchfahren wird. Beim Anlegen der Bremsbacken 3 an die Bremsscheibe 4, also zu Beginn des Festbremsvorganges, gelangt die Rolle 44 auf den flacheren Abschnitt 43 der Keilfläche 41 und beginnt auf diesem abzurollen, wobei die auf den Keilkörper 39 vom Federspeicherbremszylinder 22' ausgeübte Verschiebekraft mit hoher Kraftübersetzung in ein hohes Drehmoment für die Zusatzwelle 18 und damit eine hohe Zuspannkraft für die Bremszangeneinheit umgesetzt wird. In Fig.9 ist der Festbremszustand des Keilkörpers 39 und der Rolle 44 dargestellt.

Die Fig. 10 zeigt eine besonders vorteilhafte Ausführungsform des Keilgetriebes: Der Keilkörper 39 weist an seinem kolbenstangenseitigen Ende einen kreisscheibenartigen Führungsabschnitt 48 auf, ansonsten ist der Querschnitt des Keilkörpers 39 etwa rechteckig, die Keilfläche 41 befindet sich in diesem Abschnitt 49 mit rechteckigem Querschnitt. Der Durchmesser des Führungsabschnittes 48 ist größer als derjenige eines den rechteckigen Abschnitt 49 umfassenden Außenkreises. Der Führungsabschnitt 48 ist vermittels eines Gleitbandes 50 reibungsarm verschieblich in einem am Gehäuse 51 des Federspeicherbremszylinders 22' gehalterten Führungsrohres 52 geführt, das Führungsrohr 52 verläuft im wesentlichen innerhalb des Federspeicherbremszylinders 22' mit Radialabstand in dessen Speicherfeder 53 eingreifend. Da somit bei Betätigung des Federspeicherbremszylinders 22' der Abschnitt 49 des Keilkörpers 39 teilweise in das Führungsrohr 51 und damit den Federspeicherbremszylinder 22' einziehbar ist, ist bei guter Keilkörperführung eine besonders kurze und einbaugünstige Gestaltung möglich. Mit dem am Gehäuse 6 der Bremszangeneinheit gehalterten Gehäuse 51 des Federspeicherbremszylinders 22' ist ein Getriebegehäuse 54 verbunden, in welchem der Keilkörper 39 verschieblich ist und an welchem die Rolle 47 gelagert ist. Ansonsten entspricht die Ausführung nach Fig.10 derjenigen nach den Fig.5 bis 9 sowie 11 und 12.

Selbstverständlich ist ein Keilgetriebe der vorstehend beschriebenen Art auch als Drehantrieb für eine ansonsten nach den Fig. 2 und 3 ausgebildete Bremszangeneinheit verwendbar, bei "drückendem" Federspeicherbremszylinder ist lediglich die Keilfläche 41 entsprechend der umgekehrten Keilkörperbewegung umgekehrt zu gestalten.

Es ist offensichtlich, daß bei allen vorstehend dargestellten Ausführungsformen der Bremszangeneinheit für die Betriebs- und Festellbremsbetätigung unterschiedliche, jeweils optimal festlegbare Kraftübersetzungen verwirklichbar sind.

### Kurzfassung:

Die Bremszangeneinheit für insbesondere Schienenfahrzeuge weist eine Bremszange mit zwei Zangenhebel (1;2) auf, deren einer über ein von einer Welle (8) betätigbares Exzentergetriebe (5) und deren anderer unmittelbar an einem Gehäuse (6) gelagert ist. Die Welle (8) ist in Bremsenzuspannrichtung vermittels eines Kurbelarmes (14) von einem Bremszylinder (16) der Betriebsbremse und parallel hierzu vermittels einer Zusatzwelle (18) und eines von dieser auskragenden Drehhebels (19) von einem Federspeicherbremszylinder (22) einer Feststellbremse drehbar, es sind unterschiedliche, jeweils optimal festlegbare Kraftübersetzungen für die Betriebs- und die Feststellbremse möglich. Zwischen den Bremszylinder (16) und die Welle (8) bzw. den Federspeicherbremszylinder (22) und die Zusatzwelle (18) kann jeweils eine Anschlagvorrichtung (23 bzw. 24) eingeordnet sein, die beim Betätigen des jeweils ferneren Zylinders abhebt, so daß der unbetätigte Zylinder in Ruhe verbleiben kann. Die Welle (8) und die Zusatzwelle (18) sind drehgekoppelt, gegebenenfalls einstückig Der Bremszylinder (16) ist etwa in der Zangenebene (9) zwischen den Zangenhebeln (1;2) und der Federspeicherbremszylinder (22) unter dem Bremszylinder (16) angeordnet, hierdurch ist eine kompakte, einbaugünstige Gestaltung der Bremszangeneinheit möglich.

| Austellung der Bezugszeichen. | | | |
|---|---|---|---|
| 1 | Zangenhebel | 2 | Zangenhebel |
| 3 | Bremsbacke | 4 | Bremsscheibe |
| 5 | Exzentergetriebe | 6 | Gehäuse |
| 7 | Lagerstellen | 8 | Welle |
| 9 | Zangenebene | 10 | Zapfen |
| 11 | Bolzen | 12 | Nachstellvorrichtung |
| 13 | Gestänge | 14 | Kurbelarm |
| 15 | Kolbenstange | 16 | Bremszylinder |
| 17 | Lagerauge | 18 | Zusatzwelle |
| 19 | Drehhebel | 20 | Gleitstück |
| 21 | Kolbenstange | 22 | Federspeicherbremszylinder |
| 22' | Federspeicherbremszylinder | 23 | Anschlagvorrichtung |
| 24 | Anschlagvorrichtung | 25 | Verlängerung |
| 26 | Längsbohrung | 27 | Schraubbolzen |
| 28 | Kolben | 29 | Kolbenstangenrohr |
| 30 | Feder | 31 | Stößel |
| 32 | Bolzendrehlager | 33 | Drehnocken |
| 34 | Fläche | 35 | Rolle |
| 36 | Rollenhalter | 37 | Achse |
| 38 | Anschlagvorrichtung | 39 | Keilkörper |
| 40 | Nut | 41 | Keilfläche |
| 42 | Abschnitt | 43 | Abschnitt |
| 44 | Rolle | 45 | Drehhebel |
| 46 | Führungsfläche | 47 | Rolle |
| 48 | Führungsabschnitt | 49 | Abschnitt |
| 50 | Gleitband | 51 | Gehäuse |
| 52 | Führungsrohr | 53 | Speicherfeder |
| 54 | Getriebegehäuse | | |

## Patentansprüche

1. Bremszangeneinheit für Scheibenbremsen von Fahrzeugen, insbesondere Schienenfahrzeugen, mit zwei im wesentlichen annähernd parallel in einer Zangenebene (9) nebeneinander verlaufenden Zangenhebeln (1;2), an deren eine Enden zum Zuspannen der Scheibenbremse an eine Bremsscheibe (4) anpreßbare Bremsbacken (3) angelenkt sind und die an ihren anderen Enden und in ihren mittleren Bereichen miteinander bzw. mit einem Gehäuse (6) schwenkbar gekoppelt sind, wobei zumindest eine der Koppelstellen als Exzentergetriebe (5) mit einer von einem Bremskrafterzeuger der Betriebsbremse in Zuspannrichtung drehbaren Welle (8) und die anderen Koppelstellen als Drehlager ausgebildet sind,
gekennzeichnet durch einen mit der Welle (8) gekoppelten, von einer Feststellbremse in Zuspannrichtung betätigbaren Drehantrieb.

2. Bremszangeneinheit nach Anspruch 1, dadurch gekennzeichnet, daß der Drehantrieb zumindest im wesentlichen mit Abstand zur Zangenebene (9) angeordnet ist.

3. Bremszangeneinheit nach Anspruch 2, wobei die Welle (8) drehbar am Gehäuse (6) gelagert ist, dadurch gekennzeichnet, daß die Welle (8) mit einer zu ihr parallel verlaufenden Zusatzwelle (18) zumindest drehkoppelbar ist.

4. Bremszangeneinheit nach Anspruch 3, dadurch gekennzeichnet, daß die Welle (8) und die Zusatzwelle (18) seitlich und zumindest teilweise axial zueinander versetzt verlaufen.

5. Bremszangeneinheit nach Anspruch 3, dadurch gekennzeichnet, daß die Welle (8) und die Zusatzwelle (18) koaxial zueinander verlaufen.

6. Bremszangeneinheit nach Anspruch 5, dadurch gekennzeichnet, daß die Welle (8) und die Zusatzwelle (18) einstückig sind.

7. Bremszangeneinheit nach Anspruch 6, dadurch gekennzeichnet, daß der Durchmesser der Welle (8) einschließlich deren als Zapfen (10) ausgebildeten Exzenter kleiner ist als der Durchmesser der Lagerung der Zusatzwelle (18).

8. Bremszangeneinheit nach Anspruch 3, 4 oder 5, dadurch gekennzeichnet, daß die Welle (8) und die Zusatzwelle (18) vermittels einer formschlüssigen Drehkupplung lösbar miteinander gekuppelt sind.

9. Bremszangeneinheit nach Anspruch 8, dadurch gekennzeichnet, daß die Welle (8) mit einer exzentrischen Längsbohrung (26) ausgebildet ist, daß der zusatzwellenabgewandte Zapfen (10) vom Kopf eines die Längsbohrung (26) durchgreifenden Schraubbolzens (27) gehaltert bzw. gebildet ist, daß die Zusatzwelle (18) fest den anderen Zapfen (10) trägt und eine Verlängerung (25) über diesen hinaus aufweist, die in die Längsbohrung (26) unverdrehbar eingreift, und daß der Schraubbolzen (27) mit der Verlängerung (25) verschraubt ist.

10. Bremszangeneinheit nach einem oder mehreren der vorstehenden Ansprüche 3 bis 9, wobei eine Kolbenstange (21) des als Bremszylinder (16) ausgebildeten Bremskraftmotors mit einem mit der Welle (8) drehfest verbundenen Kurbelarm (14) gekoppelt ist, dadurch gekennzeichnet, daß von der Zusatzwelle (18) ein an seinem freien Ende mit der Feststellbremse gekoppelter Drehhebel (19) auskragt, wobei in zumindest eine der Koppelstellen zwischen Kolbenstange (21) und Kurbelarm (14) bzw. zwischen Feststellbremse und Drehhebel (19) eine bei Drehen der Welle (8) bzw. der Zusatzwelle (18) in Zuspannrichtung aushebbare Anschlagvorrichtung (23 bzw. 24) eingeordnet ist.

11. Bremszangeneinheit nach Anspruch 8, dadurch gekennzeichnet, daß in die Drehkuppelung von Welle (8) und Zusatzwelle (18) eine bei Drehen der Welle (8) in Zuspannrichtung aushebbare Anschlagvorrichtung (38) eingeordnet ist.

12. Bremszangeneinheit nach Anspruch 5, dadurch gekennzeichnet, daß die Drehkoppelung von Welle (8) und Zusatzwelle (18) als bei Drehen der Welle (8) in Zuspannrichtung lösende Einwegdrehkupplung ausgebildet ist.

13. Bremszangeneinheit nach Anspruch 10 oder 11, dadurch gekennzeichnet, daß die Anschlagvorrichtung (38) an ihrer Eingriffsstelle einerseits eine Fläche (34) und andererseits eine auf der Fläche (34) abrollbare Rolle (35) aufweist.

14. Bremszangeneinheit nach den Ansprüchen 4, 11 und 13, dadurch gekennzeichnet, daß die Zusatzwelle (18) einen Drehnocken (33) mit einer zumindest annähernd radial verlaufenden Fläche (34) aufweist, an welcher eine an einem gegebenenfalls mit dem Bremskrafterzeuger der Betriebsbremse gekoppelten, von der Welle (8) auskragenden Kurbelarm (14) gelagerte Rolle (35) abrollbar ist.

15. Bremszangeneinheit nach einem oder mehreren der vorstehenden Ansprüche, dadurch gekennzeichnet, daß der Drehantrieb ein Keilgetriebe aufweist.

16. Bremszangeneinheit nach Anspruch 15, dadurch gekennzeichnet, daß das Keilgetriebe einen von der Feststellbremse bei deren Betätigung linear verschiebbaren Keilkörper (39) mit einer Keilfläche (41) aufweist, an dessen Keilfläche (41) eine Rolle (44) abrollbar ist, welche an einem von der Zusatzwelle (18) auskragenden Drehhebel (45) gelagert ist.

17. Bremszangeneinheit nach Anspruch 16, dadurch gekennzeichnet, daß am Gehäuse (6) bzw. einem mit diesem verbundenen Teil eine Rolle (47) gelagert ist, an welcher der Keilkörper (39)außenseitig, gegenüberliegend zur Aufstandsstelle der am Drehhebel (45) gelagerten Rolle (44), auf der Keilfläche (41) abrollbar aufliegt.

18. Bremszangeneinheit nach den Ansprüchen 16 und 17, dadurch gekennzeichnet, der Keilkörper (39) mit der Kolbenstange (21) eines der Feststellbremse zugehörenden Federspeicherbremszylinders (22') verbunden und vermittels eines an seinem federspeicherbremszylinderseitigen Ende befindlichen Führungsabschnitt (48) in einem am Gehäuse (51) des Federspeicherbremszylinders (22') gehalterten Führungsrohr (52) verschieblich geführt ist, dessen Durchmesser ausreichend groß zum Durchtritt des Keilkörpers (39) bemessen ist, und daß die außenseitig am Keilkörper (39) abrollbare Rolle (47) am Gehäuse des Federspeicherbremszylinders (22') oder einem mit diesem fest verbundenen Teil (Getriebgehäuse 54) gelagert ist.

19. Bremszangeneinheit nach Anspruch 18, dadurch gekennzeichnet, daß der Keilkörper (39) im Bereich des Führungsabschnittes (48) einen kreisscheibenartigen und ansonsten einen etwa rechteckigen Querschnitt aufweist und daß die Keilfläche (41) sich im rechteckigen Querschnittsbereich befindet, in welchem sie als eine Seitenwandung einer zumindest einseitig offenen Nut (40) ausgebildet ist, und daß mit den Gehäusen (6; 51) der Bremszangeneinheit und des Fedespeicherbremszylinders (22') ein Getriebegehäuse (54) verbunden ist, in welches der Keilkörper (39) mit seinem rechteckigen Querschnittsbereich verschieblich eingreift und an welchem die ihn abstützende Rolle (47) gelagert ist.

## Claims

1. Brake caliper unit for disk brakes of vehicles, in particular railway vehicles, having two caliper levers (1; 2) which extend substantially in an approximately parallel manner side by side in a caliper plane (9) and articulated at the one ends of which there are brake shoes (3) that can be pressed against a brake disk (4) for the purpose of applying the disk brake and which at their other ends and in their central regions are coupled to each other or to a housing (6) in such a way that they can be swivelled, with at least one of the coupling points being formed as an eccentric gear unit (5) that has a shaft (8) which can be rotated by a brake-force generating means of the service brake in the direction of brake-application and the other coupling points of which are formed as pivot bearings, characterised by a rotary drive which is coupled to the shaft (8) and which can be actuated by a parking brake in the direction of brake-application.

2. Brake caliper unit according to claim 1, characterised in that the rotary drive is arranged at least substantially at a distance from the caliper plane (9).

3. Brake caliper unit according to claim 2, wherein the shaft (8) is rotatably mounted on the housing (6), characterised in that the shaft (8) can be coupled at least rotationally to an additional shaft (18) extending parallel to it.

4. Brake caliper unit according to claim 3, characterised in that the shaft (8) and the additional shaft (18) extend with a lateral and at least in part an axial offset with respect to each other.

5. Brake caliper unit according to claim 3, characterised in that the shaft (8) and the additional shaft (18) extend coaxially in relation to each other.

6. Brake caliper unit according to claim 5, characterised in that the shaft (8) and the additional shaft (18) are in one piece.

7. Brake caliper unit according to claim 6, characterised in that the diameter of the shaft (8) including its eccentric formed as a journal (10) is smaller than the diameter of the bearing of the additional shaft (18).

8. Brake caliper unit according to claim 3, 4 or 5, characterised in that the shaft (8) and the additional shaft (18) are coupled to each other in a detachable manner by means of a positive-locking rotary coupling.

9. Brake caliper unit according to claim 8, characterised in that the shaft (8) is formed with an eccentric longitudinal bore (26), in that the journal (10) that is remote from the additional shaft is held or formed by the head of a screw bolt (27) that passes through the longitudinal bore (26), in that the additional shaft (18) fixedly bears the other journal (10) and has an extension (25) beyond the latter, which extension (25) engages in a non-rotatable manner into the longitudinal bore (26), and in that the screw bolt (27) is screwed to the extension (25).

10. Brake caliper unit according to one or more of the preceding claims 3 to 9, wherein a piston rod (21) of the brake-force motor formed as a brake cylinder (16) is coupled to a crank arm (14) that is connected to the shaft (8) in a rotationally secure manner, characterised in that projecting out from the additional shaft (18) there is a rotary lever (19) which at its free end is coupled to the parking brake, wherein arranged in at least one of the coupling points between the piston rod (21) and the crank arm (14) and between the parking brake and the rotary lever (19) there is a stop arrangement (23 and 24 respectively) which can be lifted out upon rotation of the shaft (8) and the additional shaft (18) respectively in the direction of brake-application.

11. Brake caliper unit according to claim 8, characterised in that arranged in the rotary coupling of the shaft (8) and additional shaft (18) there is a stop arrangement (38) which can be lifted out upon rotation of the shaft (8) in the direction of brake-application.

12. Brake caliper unit according to claim 5, characterised in that the rotary coupling of the shaft (8) and additional shaft (18) is formed as a one-way rotary coupling which is undone upon rotation of the shaft (8) in the direction of brake-application.

13. Brake caliper unit according to claim 10 or 11, characterised in that the stop arrangement (38) at its point of engagement, on the one hand, has a surface (34) and, on the other hand, has a roller (35) which can roll against the surface (34).

14. Brake caliper unit according to claims 4, 11 and 13, characterised in that the additional shaft (18) has a rotary cam (33) with a surface (34) which extends at least substantially radially and against which a roller (35) can roll, the roller being mounted on a crank arm (14) which, if applicable, is coupled to the brake-force generating means of the service brake and projects out from the shaft (8).

15. Brake caliper unit according to one or more of the preceding claims, characterised in that the rotary drive has a wedge gear unit.

16. Brake caliper unit according to claim 15, characterised in that the wedge gear unit has a wedge body (39) which can be displaced in a linear manner by the parking brake when the latter is actuated and has a wedge surface (41), against which a roller (44), mounted on a rotary lever (45) projecting out from the additional shaft (18), can roll.

17. Brake caliper unit according to claim 16, characterised in that mounted on the housing (6) or on a portion connected therewith there is a roller (47) on which the wedge body (39) rests on the outside, opposite the contact point of the roller (44) mounted on the rotary lever (45) and in such a manner that it can roll against the wedge surface (41).

18. Brake caliper unit according to claims 16 and 17, characterised in that the wedge body (39) is connected to the piston rod (21) of a spring-loaded brake cylinder (22') pertaining to the parking brake and is guided in a displaceable manner by means of a guiding section (48), located at its end that is on the spring-loaded brake cylinder side, in a guide tube (52) that is held on the housing (51) of the spring-loaded brake cylinder (22') and the diameter of which is dimensioned so as to be sufficiently large for the passage of the wedge body (39), and in that the roller (47), which can roll against the outside of the wedge body (39), is mounted on the housing of the spring-loaded brake cylinder (22') or a portion (gear-unit housing 54) fixedly connected to the latter.

19. Brake caliper unit according to claim 18, characterised in that the wedge body (39) in the region of the guiding section (48) has a cross section which is like that of a circular disk and otherwise is substantially rectangular, and in that the wedge surface (41) is located in the rectangular cross-sectional region in which it is formed as a side wall of a groove (40) which is open at least on one side, and in that connected to the housings (6; 51) of the brake caliper unit and the spring-loaded brake cylinder (22') there is a gear-unit housing (54) in which the rectangular cross-sectional region of the wedge body (39) engages in a displaceable manner and on which the roller (47) supporting the wedge body is mounted.

## Revendications

1. Unité formant pince de frein pour freins à disque de véhicules, notamment de véhicules ferroviaires, comportant deux leviers de pince (1;2) qui sont essentiellement approximativement parallèles et s'étendent côte-à-côte dans un plan (2) de la pince et à l'une des extrémités desquels sont articulés des mâchoires de frein (3) qui peuvent être serrées de manière à serrer le frein à disque contre un disque de frein (4), ces leviers étant accouplés de manière à pouvoir pivoter entre eux et au carter (6), au niveau de leurs autres extrémités et dans leurs parties médianes, et dans laquelle au moins l'un des points d'accouplement est réalisé sous la forme d'un mécanisme à excentrique (5) comportant un arbre (8) pouvant être entraîné en rotation dans le sens du serrage par un générateur de la force de freinage du frein de service, tandis que les autres points d'accouplement sont agencés sous la forme de paliers rotatifs, caractérisée par un dispositif d'entraînement en rotation accouplé à l'arbre (8) et pouvant être actionné dans le sens du serrage par un frein de parcage.

2. Unité formant pince de frein selon la revendication 1, caractérisée en ce que le dispositif d'entraînement en rotation est disposé au moins essentiellement à distance du plan (9) de la pince.

3. Unité formant pince de frein selon la revendication 2, dans laquelle l'arbre (8) est monté de manière à pouvoir tourner sur le carter (6), caractérisée en ce que l'arbre (8) peut être au moins couplé en rotation à un arbre supplémentaire (18) qui lui est parallèle.

4. Unité formant pince de frein selon la revendication 3, caractérisée en ce que l'arbre (8) et l'arbre supplémentaire (18) sont décalés latéralement et au moins partiellement axialement l'un par rapport à l'autre.

5. Unité formant pince de frein selon la revendication 3, caractérisée en ce que l'arbre (8) et l'arbre supplémentaire (18) sont coaxiaux.

6. Unité formant pince de frein selon la revendication 5, caractérisée en ce que l'arbre (8) et l'arbre supplémentaire (18) sont formés d'un seul tenant.

7. Unité formant pince de frein selon la revendication 6, caractérisée en ce que le diamètre de l'arbre (8) y compris son excentrique agencé sous la forme d'un embout saillant (10) est inférieur au diamètre du support de l'arbre supplémentaire (18).

8. Unité formant pince de frein selon la revendication 3, 4 ou 5, caractérisée en ce que l'arbre (8) et l'arbre supplémentaire (18) sont accouplés entre eux de façon amovible au moyen d'un accouplement de rotation par formes complémentaires.

9. Unité formant pince de frein selon la revendication 8, caractérisée en ce que l'arbre (8) est agencé avec un perçage longitudinal excentré (26), que l'embout saillant (10), tourné à l'opposé de l'arbre supplémentaire, est retenu ou formé par la tête d'un boulon fileté (27), qui traverse le perçage longitudinal (26), en ce que l'arbre supplémentaire (18) polie de façon fixe l'autre embout saillant (10) et comporte un prolongement (25) qui s'étend au-delà de cet embout saillant et s'engage, avec blocage en rotation, dans le perçage longitudinal (26), et en ce que le boulon fileté (27) est relié par vissage au prolongement (25).

10. Unite formant pince de frein selon une ou plusieurs des revendications précédentes 3 à 9, dans laquelle une tige de piston (21) du moteur produisant la force de freinage, agencé sous la forme d'un cylindre de frein (16), est accouplée à un bras de manivelle (14), qui est relié avec blocage en rotation à l'arbre (8), caractérisée en ce qu'à partir de l'arbre supplémentaire (18) s'étend en porte-à-faux un levier pivotant (19), qui est accouplé, au niveau de son extrémité libre, au frein de parcage, et dans lequel en au moins l'un des points d'accouplement, entre la tige de piston (21) et le bras de manivelle (14) et entre le frein de parcage et le levier tournant (19) est disposé un dispositif de butée (23 ou 24), qui lors de la rotation de l'arbre (8) ou de l'arbre supplémentaire (18) peut être ressorti dans la direction de serrage.

11. Unité formant pince de frein selon la revendication 8, caractérisée en ce que dans l'accouplement en rotation entre l'arbre (8) et l'arbre supplémentaire (18) est inséré un dispositif de butée (38), qui peut être ressorti dans la direction de serrage lors de la rotation de l'arbre (8).

12. Unité formant pince de frein selon la revendication 5, caractérisée en ce que l'accouplement en rotation de l'arbre (8) et de l'arbre supplémentaire (18) est agencé sous la forme d'un accouplement en rotation unidirectionnel, qui se défait lors de la rotation de l'arbre (8) dans la direction de serrage.

13. Unité formant pince de frein selon la revendication 10 ou 11, caractérisée en ce que ledit dispositif de butée (38) comporte, au niveau de son point d'attaque, d'une part une surface (34) et d'autre part un rouleau (33) pouvant rouler sur la surface (24).

14. Unité formant pince de frein selon les revendications 4, 11 et 13, caractérisée en ce que l'arbre supplémentaire (18) possède une came pivotante (33) comportant une surface (34) qui s'étend au moins approximativement radialement et sur laquelle peut rouler un galet (35) qui est monté sur un bras de manivelle (14) qui est éventuellement accouplé au générateur de la force de freinage du frein de service et s'étend en saillie par rapport à l'arbre (8).

15. Unité formant pince de frein selon une ou plusieurs des revendications précédentes, caractérisée en ce que le dispositif d'entraînement en rotation comporte un mécanisme à coin.

16. Unite formant pince de frein selon la revendication 15, caractérisée en ce que le mécanisme à coin comporte un corps en coin (32), qui est déplaçable linéairement par le frein de parcage lors de l'actionnement de ce dernier et comporte une surface de coin (41), sur laquelle peut rouler un galet (44), qui est monté sur un levier pivotant (45), qui s'étend en saillie à partir de l'arbre supplémentaire (18).

17. Unité formant pince de frein selon la revendication 16, caractérisée en ce que sur le carter (6) ou sur une partie reliée à ce dernier est monté un galet (47), qui s'applique extérieurement, avec possibilité de roulement, sur le corps en coin (39), à l'opposé du point d'appui du galet (44) monté sur le levier pivotant (45) sur la surface en coin (41).

18. Unité formant pince de frein selon les revendications 16 et 17, caractérisée en ce que le corps en coin (39) est relié à la tige de piston (21) d'un cylindre de frein à ressort accumulateur (22'), qui est associé au frein de parcage, et est guidé au moyen d'une partie de guidage (48) située sur son extrémité proche du cylindre de frein à ressort accumulateur, en étant déplaçable dans un tube de guidage (52) qui est retenu sur le carter (51) du cylindre de frein à ressort accumulateur (22') et dont le diamètre est choisi suffisamment grand pour permettre le passage du corps en coin (39), et en ce que le galet (45), qui peut rouler sur le côté extérieur du corps en coin (39), est supporté par le carter du cylindre de frein à ressort accumulateur (22') ou d'une partie (carter de transmission 54) solidaire de ce carter.

19. Unité formant pince de frein selon la revendication 18, caractérisée en ce que le corps en coin (39) possède dans la zone de la partie de guidage (48), une section transversale en forme de disque circulaire et, ailleurs, une section transversale approximativement rectangulaire, et en ce que la surface en coin (41) est située dans la zone rectangulaire en coupe transversale, dans laquelle elle est agencée sous la forme d'une paroi latérale d'une rainure (40) ouverte au moins d'un côté, et en ce qu'aux carters (6;51) de l'unité formant pince de frein et du cylindre de fiein à ressort à accumulateur (22') est relié un carter de transmission (54), dans lequel le corps en coin (39) s'engage avec possibilité de déplacement par sa partie de section transversale rectangulaire et sur lequel est monté le galet (47) qui supporte le corps.
